(19) Europäisches Patentamt / European Patent Office / Office européen des brevets

(11) **EP 1 829 379 B1**

(12) **FASCICULE DE BREVET EUROPEEN**

(45) Date de publication et mention de la délivrance du brevet:
**25.09.2019 Bulletin 2019/39**

(21) Numéro de dépôt: **05825218.0**

(22) Date de dépôt: **21.12.2005**

(51) Int Cl.:
*H04N 21/2347* (2011.01)      *H04N 19/70* (2014.01)
*H04N 21/845* (2011.01)

(86) Numéro de dépôt international:
**PCT/EP2005/057010**

(87) Numéro de publication internationale:
**WO 2006/067172 (29.06.2006 Gazette 2006/26)**

(54) **CHIFFREMENT D'UNE VIDEO H.264 PRESERVANT SYNCHRONISATION ET COMPATIBILITE DE LA SYNTAXE**

VIDEO-H . 264-VERSCHLÜSSELUNG, DIE SYNCHRONISATION UND SYNTAX-KOMPATIBILITÄT ERHÄLT

VIDEO H . 264 ENCRYPTION PRESERVING SYNCHRONIZATION AND COMPATIBILITY OF SYNTAX

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.12.2004 FR 0413746**

(43) Date de publication de la demande:
**05.09.2007 Bulletin 2007/36**

(73) Titulaire: **THALES**
**92400 Courbevoie (FR)**

(72) Inventeurs:
• **LAMY-BERGOT, Catherine**
**75019 Paris (FR)**
• **BERGERON, Cyril**
**01100 Geovreisset (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 1 499 126      WO-A-02/062008**

**WO-A-2005/032135      US-A- 5 636 279**

• **J. CAPOROSSI, D. PARAYRE, D. LECOMTE: "Scalable Video Medialiving : a low bit-rate layered protection of content" INTERNATIONAL ORGANISATION FOR STANDARDISATION, CODING OF MOVING PICTURES AND AUDIO, ISO/IEC JTC1/SC29/WG11/M9757, juillet 2003 (2003-07), pages 1-11, XP002370849 Trondheim, Norway**
• **ZENG W ET AL: "EFFICIENT FREQUENCY DOMAIN VIDEO SCRAMBLING FOR CONTENT ACCESS CONTROL" ACM MULTIMEDIA, PROCEEDINGS OF THE INTERNATIONAL CONFERENCE, NEW YORK, NY, US, 30 octobre 1999 (1999-10-30), pages 285-294, XP000956270**
• **WEN J ET AL: "A FORMAT-COMPLIANT CONFIGURABLE ENCRYPTION FRAMEWORK FOR ACCESS CONTROL OF VIDEO" IEEE TRANSACTIONS ON CIRCUITS AND SYSTEMS FOR VIDEO TECHNOLOGY, IEEE INC. NEW YORK, US, vol. 12, no. 6, juin 2002 (2002-06), pages 545-557, XP001114982 ISSN: 1051-8215**
• **"TEXT OF FINAL COMMITTEE DRAFT OF JOINT VIDEO SPECIFICATION (ITU-T REC. H.264 / ISO/IEC 14496-10 AVC)" INTERNATIONAL ORGANIZATION FOR STANDARDIZATION - ORGANISATION INTERNATIONALE DE NORMALISATION, juillet 2002 (2002-07), pages I-XV,1-197, XP001100641**

EP 1 829 379 B1

**Description**

L'invention concerne un procédé et un dispositif de chiffrement sélectif compatible pour les flux vidéo, tels que ceux produits avec le standard H.264/MPEG-4 AVC.

L'invention s'applique aussi pour les standards vidéo ou les procédés qui permettent de discriminer les bits tout en respectant les conditions de contextes de codage ou d'impact visuel.

Dans la description, l'expression « bits interchangeables », correspond à des bits qui n'ont pas ou peu d'influence sur le procédé de décodage. Dans l'application vidéo, par exemple, l'impact considéré comme négligeable est un impact uniquement visuel, qui n'engendre pas de désynchronisation pour le décodage.

Les échanges de données multimédia vont en augmentant, ce qui conduit à une demande croissante pour les communications vidéo lointaines et au développement de systèmes ayant pour objectifs de fournir des échanges d'informations confidentiels et fiables.

Les aspects de sécurité liés à la confidentialité de ces échanges dans les procédés et les systèmes aujourd'hui connus sont en général très insuffisants. Le standard de codage vidéo actuel n'offre pas de capacités de codage répondant aux besoins, les schémas de codage tels que le format MPEG reposant sur la prédiction de codage sont par nature de mauvais candidats pour le chiffrement.

Les études au niveau du groupe des experts de codage vidéo (VCEG) de l'ITU-T ont commencé en 1999 pour établir un nouveau standard vidéo capable d'offrir une compression plus efficace que la compression offerte par les solutions existantes, tout en présentant un niveau de complexité raisonnable pour son implémentation et finalement être facilement utilisable pour des applications réseau, en particulier les réseaux sans fil et les réseaux internet. Le consortium MPEG a proposé au groupe des experts VCEG de créer un partenariat pour établir un standard commun, désigné sous le nom H.264 ou MPEG-4 AVC (codage vidéo avancé). La version finale du document ITU JVT-G050, qui est à l'heure actuelle le document normatif de référence pour ce standard, spécifie seulement les aspects du codage vidéo.

A l'heure actuelle, les principales applications de la norme H.264 sont :

- les services duplex temps-réel de la voix, par exemple la vidéoconférence sur des réseaux câblés ou sans fil (tel que l'UMTS Universal Mobile Télécommunication system), avec un débit inférieur à 1 Mb/s et un faible délai d'attente ;
- les services vidéo de bonne qualité et de qualité élevée pour la transmission en diffusion (« streaming ») satellite, xDLS, ou DVD, où le débit est compris entre 1 et 8 Mb/s et où le délai d'attente peut être important ;
- les flux de qualité plus faible pour des services vidéo avec un débit inférieur, tels que les applications Internet (un débit inférieur à 2Mb/s et un délai d'attente qui peut être important).

Le standard H.264 inclut aussi deux modes de codage entropiques, le mode de codage algébrique adaptatif au contexte (en anglo-saxon Context-Adaptative Algebrique codage ou CABAC) qui repose sur la compression algébrique, et le mode de codage VLC adaptatif au contexte (en anglo-saxon Contexte Adaptative Variable Length Coding ou CAVLC) qui repose sur des codes classiques de longueur variable.

On utilise deux familles de codes dans ce dernier mode : les codes Exp-Golomb qui sont des codes VLC ayant une construction régulière, et un code spécifique CAVLC qui est utilisé pour coder les données des blocs résiduels, c'est-à-dire les valeurs des coefficients obtenus après réarrangement en zigzag du bloc.

Le codage d'un bloc résiduel est la partie la plus complexe dans le procédé de codage H.264.

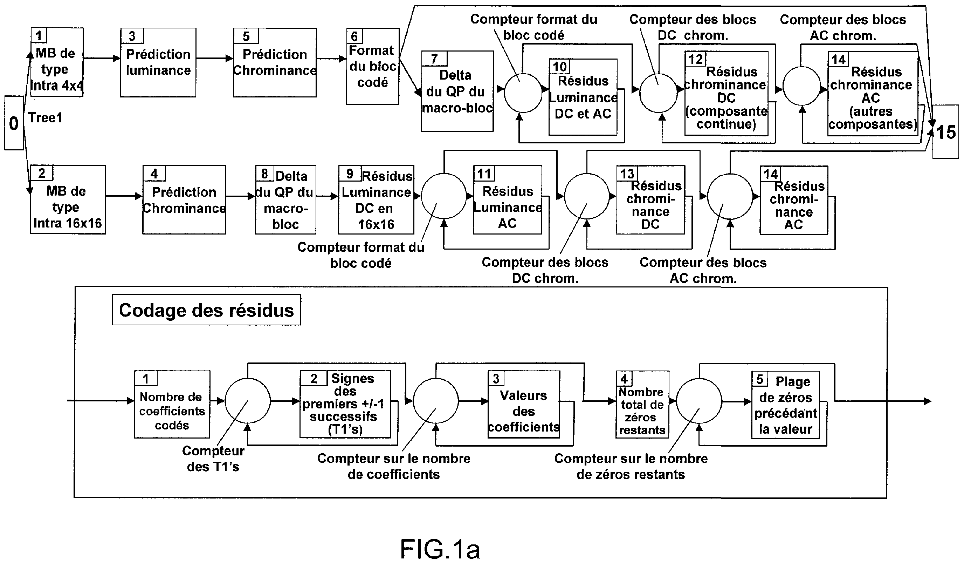

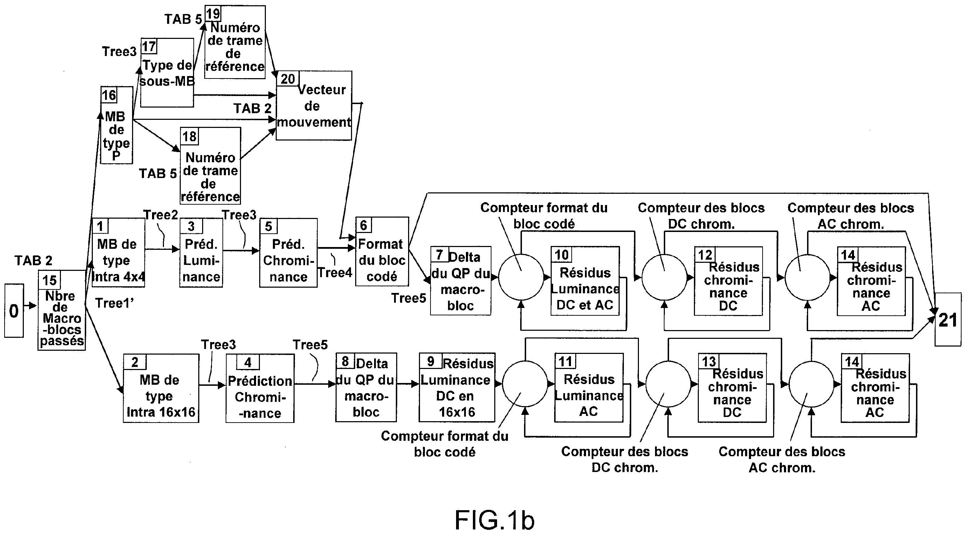

Les figures 1a et 1b représentent un schéma de procédé de codage et de décodage pour les tranches d'images Intra (I) et Prédictive (P) du standard H.264.

Comme illustré sur ces figures 1, le procédé repose sur des étapes de dérivation et de codage avec des tables VLC qui peuvent dépendre des éléments codés précédemment. On voit ainsi apparaître les tables donnant le nombre de coefficients non nuls ou Total_coeff, les signes des valeurs suivantes +/-1, ou T1, les niveaux des coefficients résiduels différents de zéro, le nombre total de zéro avant le dernier coefficient non nul ou Total_zéros, et le nombre de zéros précédant chaque coefficient différent de zéro ou run_before.

Dans la description, on utilise des correspondances entre les termes utilisés sur ces figures 1a et 1b et ceux anglo-saxons employés habituellement dans la norme :

- Prédiction luminance = prediction luma
- Prédiction chrominance = prediction chroma
- Format du bloc codé = Coded block pattern
- delta du paramètre de quantification (QP) du macro-block = Mb_QP delta
- Résidu luminance = Luma residual
- Résidu chrominance = Chroma residual

- composante continue (DC) = DC transform coefficient
- autres composantes ou composantes fréquentielles (AC) = AC transform coefficients
  nombre de coefficients codés = coeff token
- signe des premiers +/- 1 successifs = trailing ones (T1's) sign flag
- valeurs des coefficients = coeff levels (que l'on découpe traditionnellement en un préfixe (level prefix ou valeur de préfixe du coefficient) et un suffixe (level suffix ou valeur de suffixe du coefficient))
- nombre total de zéros restants = Total zeros
- plage de zéros précédent la valeur du coefficient = run before
- nombre de macro-blocs passés = Mb skip
- macro-bloc de type P = MB of type P - type de sous macro-bloc = sub-MB type
- numéro de trame de référence (trame utilisé pour la prédiction de type P) = Ref Id
- vecteur de mouvement du MB ou du sous-MB = Mb vect.

Dans la plupart des systèmes de chiffrement, la donnée vidéo compressée est traitée comme n'importe quelle autre donnée par le mécanisme de chiffrement placé après que le procédé de codage vidéo soit terminé, et décrypté du côté du récepteur, avant le début du procédé de décodage vidéo.

Un tel schéma ajoute un temps de latence et implique plus de calculs, puisque soit on chiffre la totalité du flux vidéo codé, soit on doit le segmenter en plusieurs flux qui seront traités séparément et ensuite rassemblés du côté du décodeur. D'autres solutions ont été introduites qui conjuguent intimement les procédés de codage et de compression.

Les solutions de chiffrement mises en oeuvre avant le mécanisme de compression conduisent toutefois à des procédés de chiffrement moins efficaces.

Il a été montré que les permutations aléatoires des coefficients transformés, « déforment » la distribution de la probabilité de ces coefficients, rendant la table de Huffman moins efficace pour le processus de compression.

Le chiffrement, résultat du procédé de cryptographie, a notamment pour but d'assurer la sécurité du message et de permettre l'accès à la version déchiffrée uniquement aux personnes autorisées. Le message original, (correspondant aux données à chiffrer et appelé plaintext est transformé en un message chiffré (composé des données chiffrées), appelé ciphertext, grâce à un mécanisme de chiffrement qui repose généralement sur l'utilisation d'une clé, dont l'échange sécurisé entre l'émetteur et le récepteur garantit que seul le récepteur est capable de déchiffrer le message crypté.

Pour être considéré comme sécurisé, le mécanisme de chiffrement doit résister à différents types d'attaques, parmi lesquels on trouve l'attaque à clair connu (reposant sur la connaissance du message initial et de sa version chiffrée).

En cryptographie, le standard de chiffrement avancé AES, en anglo-saxon « Advanced Encryption Standard », aussi connu sous le nom d'algorithme « Rinjdael » est un processus de chiffrement par bloc qui a été adopté par l'Institut national des standards et de la technologie (NIST) comme US FIPS PUB 197 en novembre 2001 après 5 ans de processus de standardisation.

Remplaçant du standard de chiffrement des données (DES), l'AES a une taille de bloc fixe de 128 bits et une taille de clé de 128, 192 ou 256 bits. Aucune attaque couronnée de succès n'a actuellement été identifiée. Ce standard a été reconnu en 2003 par l'agence NASA comme possédant un niveau de sécurité suffisant pour les données non classifiées par le gouvernement américain.

Un algorithme de chiffrement par bloc comme l'AES doit être utilisé avec un mode de confidentialité tel que le mode compteur (dit mode CTR). Ce mode comporte l'application du chiffrement en aval d'un jeu de blocs d'entrée, appelé compteurs, pour produire une séquence de blocs de sortie qui peut être utilisé pour produire le ciphertex. La référence SP 800-38A Recommendation for Block Cipher Modes of Operation - Methods and Techniques, December 2001 http://csrc.nist.gov/publications/nistpubs/800-38a/sp800-38a.pdf décrit comment générer les blocs uniques adéquats.

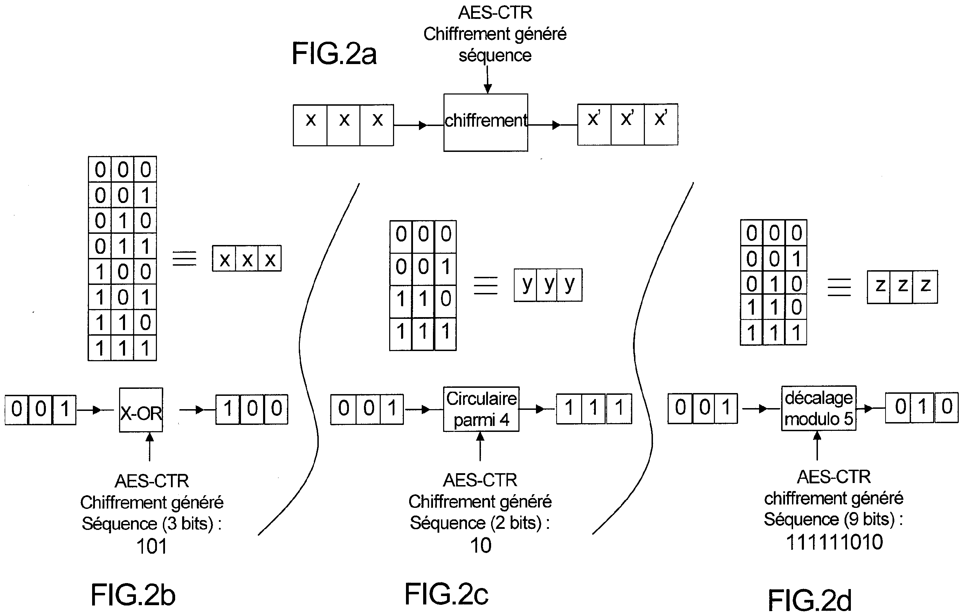

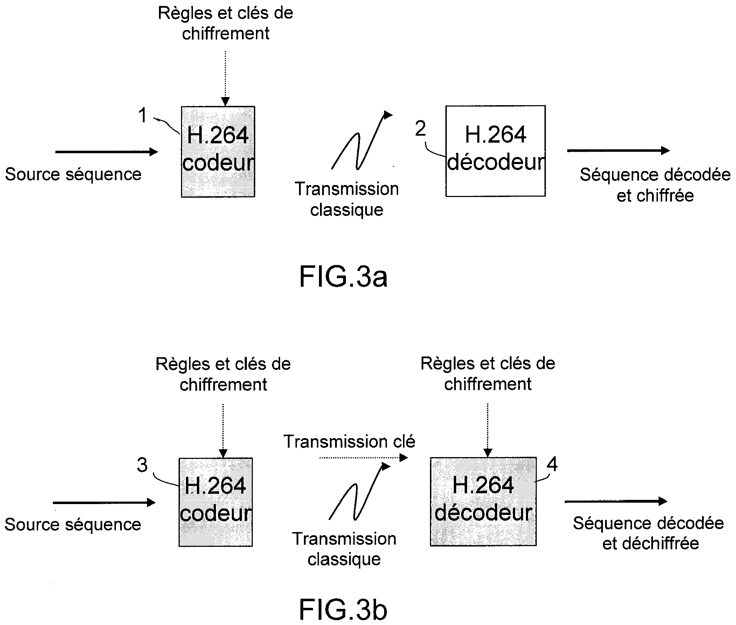

Une manière classique de procéder est de combiner, en appliquant une méthode X-OR (ou-exclusif), le bloc de sortie avec les données utiles (plaintext) pour produire les données chiffrées (ou ciphertext) et vice versa au niveau du décodeur, comme illustré en figures 2a à 2d et figure 3b.

L'application de la méthode X-OR à des données utiles avec AES en mode compteur générera des sorties ciphertext prenant toutes les configurations possibles. Typiquement, pour deux bits de données utiles on obtiendra les configurations de données chiffrées suivantes '00', '01', '10', '11', avec des probabilités égales.

Pour des applications vidéo dans le cadre de la présente invention, afin de conserver la compatibilité avec le standard vidéo, seules certaines configurations seront utilisées. Typiquement lorsque les seules configurations '00' et '11' sont possibles, le chiffrement avec le mode CTR avec X-OR qui est un mode standard employé avec AES ne sera pas considéré. Dans ce type de situation, une solution consiste à utiliser les blocs de sortie fournis par AES CTR non directement pour réaliser le chiffrement, mais pour sélectionner parmi les configurations possibles celles qui pourraient être utilisées comme données chiffrées pour des données utiles fixées. Dans ce cas, pour éviter la sélection d'une configuration non autorisée, les configurations possibles peuvent être stockées dans une table avec des positions de 0 à n-1.

Deux cas illustrés à la figure 2c, 2d peuvent ainsi être séparés :

1) lorsque le nombre de configurations possibles est une puissance de 2, pour des configurations n=2k, il est facile de voir que k bits peuvent être utilisés pour réaliser le chiffrement, une méthode pour procéder qui est notée circulaire, est d'utiliser ces k bits pour sélectionner une position i d'une configuration de données. AES CTR générant des blocs de sortie équiprobables, ce chiffrement circulaire présente de bonnes propriétés sur un plan résistance à l'analyse de chiffrement ou cryptanalysis, voir figure 2c pour k=2, i=1.

2) lorsque le nombre de configurations possibles n'est pas une puissance de 2, la situation devient plus complexe. Utiliser 2 bits signifie que les données utiles '00' auront 4 permutations possibles, les données chiffrées seront sélectionnées parmi les 3 configurations possibles '00' '01' '10'. Dans tous les cas, une configuration serait alors sélectionnée au moins 2 fois, ce qui correspond à un angle d'attaque trop important sur le plan de la résistance aux attaques de déchiffrement.

La solution est alors d'admettre un léger angle d'attaque en permettant des répartitions légèrement asymétriques des permutations.

En pratique, en considérant une clé de k bits, correspondant à 2k blocs de sortie possibles et un jeu de n configurations possible, on peut décaler d'une configuration (i) à une autre en choisissant le 2k prochain modulo n (configuration i+2k[n]).

Une même configuration est en conséquence utilisée comme données chiffrées entre $\lceil 2^k/n \rceil = \lfloor 2^k/n \rfloor + 1$ et $\lfloor 2^k/n \rfloor$ fois, ce qui implique un biais $\alpha$ dans la probabilité de distribution, défini comme l'écart de probabilité maximal pour la distribution considérée avec une distribution infiniment aléatoire, soit une distribution uniforme (où chaque configuration a une probabilité 1/*n*) ; $\alpha$ est donc calculé comme :

$$\alpha = \max\left(\left|\frac{\left\lfloor\dfrac{2^k}{n}\right\rfloor+1}{2^k}-\frac{1}{n}\right|, \left|\frac{\left\lfloor\dfrac{2^k}{n}\right\rfloor}{2^k}-\frac{1}{n}\right|\right)$$

où $\lfloor A \rfloor$ représente la partie entière du nombre A (soit l'entier immédiatement inférieur ou égal à A) et |A| la valeur absolue du nombre A.

La figure 2d illustre la solution de chiffrement avec n=5, i=1 et k=9 ce qui conduit à une valeur de biais $\alpha \cong$ 0.001302.

La valeur de k à utiliser sera déterminée par le niveau de sécurité souhaité pour l'application, et fixé pour être connue par l'émetteur et le récepteur.

Le document WEN J ET AL: "A FORMAT-COMPLIANT CONFIGURABLE ENCRYPTION FRAMEWORK FOR ACCESS CONTROL OF VIDEO", IEEE TRANSACTIONS ON CIRCUITS AND SYSTEMS FOR VIDEO TECHNOLOGY, IEEE INC. NEW YORK, US, vol. 12, no. 6, juin 2002, pages 545-557, XP001114982, ISSN: 1051-8215 divulgue une technique de chiffrement de données vidéo codées qui se fonde sur le replacement de mots de code prédéfinis par d'autres mots de code de la même longueur, ce qui permet d'obtenir un flux chiffré qui est encore compatible avec le standard de codage vidéo utilisé, le chiffrement ayant un impact seulement visuel.

Le document EP1499126 A, publié après la date de priorité de la demande courante (mais déposé avant cette date) divulgue la même idée étendue aussi à des parties des mots de code. Le remplacement des parties de mots de code par des autres parties de mots de code de la même longueur a lieu sur des données déjà codées, donc après l'étape de codage.

L'idée de l'invention repose sur une nouvelle approche qui consiste notamment à enfouir le mécanisme de chiffrement à l'intérieur du mécanisme de compression, et à effectuer le chiffrement après que le codage entropique soit effectué.

Le procédé selon l'invention consiste notamment à sélectionner un ensemble de bits qui a un impact sensiblement nul ou négligeable lors du décodage. Un tel impact, par exemple, n'entraîne pas de désynchronisation du flux de bits lors du décodage et n'engendre pas de changement majeur dans les contextes de décodage. Une partie ou la totalité de ces bits est ensuite chiffrée.

Dans le cas d'une application vidéo, l'impact d'un tel chiffrement peut être seulement visuel.

L'invention concerne un procédé de chiffrement de données échangées entre un codeur et un décodeur selon l'objet de la revendication indépendante 1 aussi bien qu'un système de chiffrement et déchiffrement selon l'objet de la revendication indépendante 6.

Le procédé selon l'invention offre notamment les avantages suivants :

- Il permet de sécuriser les transmissions des flux vidéos tels que H.264 tout en restant compatible avec le standard vidéo correspondant, permettant à tout décodeur standard de décoder un message même si c'est incorrectement du point de vue du rendu visuel,
- La méthode permet de rester compatible avec le standard vidéo H.264/MPEG-4 AVC, au sens où un codeur standard H.264 peut décoder en totalité le flux de données chiffrées sans avoir besoin de prévoir des mécanismes de resynchronisation particuliers ou de masquage d'erreur lié à des pertes de certaines parties du flux du fait de l'impossibilité pour le décodeur de les comprendre,
- L'insertion du procédé de chiffrement à l'intérieur du procédé de codage et de décodage permet notamment de ne pas altérer les procédés de transmission, et de bénéficier de la connaissance de la signification de la syntaxe de chaque bit du flux de données, ce qui permet de décider sans difficulté ni opération supplémentaire, quelles parties du flux doivent être chiffrées ou pas, et de même au niveau du récepteur quelles parties doivent être déchiffrées .

D'autres caractéristiques et avantages de la présente invention apparaîtront mieux à la lecture de la description qui suit, d'un exemple de réalisation donné à titre illustratif et nullement limitatif, annexée des figures qui représentent :

- les figures 1a et 1b représentent le procédé de codage et décodage macrobloc pour les tranches d'images I et P du standard H.264,
- les figures 2a à 2d le procédé de chiffrement avec le mode CTR, les modes dérivés et des exemples de réalisation,
- la figure 3a un schéma de principe dans le cas d'un codeur vidéo standard (ne connaissant pas le procédé de chiffrement) et la figure 3 b un schéma de principe dans le cas d'un codeur vidéo connaissant le procédé de chiffrement,
- la figure 4 l'illustration des neuf modes de prédiction 4*4 présents dans le standard H.264 ,
- la figure 5 les blocs adjacents considérés dans le cas du mode de prédiction Intra 4*4 pour déduire la valeur par défaut,
- la figure 6 deux exemples montrant les blocs pour lesquels le chiffrement ne peut être appliqué,
- la figure 7 la méthode zig-zag utilisée pour lire les coefficients de la transformée,
- les figures 8a, 8b et 8c différents exemples d'application (images chiffrées et déchiffrées) dans le cas de la séquence de référence 'Foreman',
- les figures 9a et 9b, des exemples d'application (images chiffrées et déchiffrées) dans le cas de la séquence de référence 'Children',
- la figure 10 l'évolution du rapport signal à bruit (PSNR) pour les composantes Y, U et V.

Afin de mieux faire comprendre les étapes du procédé selon l'invention, l'exemple est donné pour le standard vidéo H.264, le chiffrement utilisant les propriétés des mots de code VLC. L'invention propose un procédé de chiffrement sélectif qui permet de sécuriser la transmission des flux vidéo tels que les flux H.264 tout en conservant une compatibilité avec le standard vidéo correspondant.

De façon plus générale, les bits à chiffrer sont choisis en fonction de l'application vidéo. Les étapes décrites ci-après peuvent être appliquées dans tout autre procédé qui permet de discriminer les bits tout en respectant les conditions de contextes de codage ou d'impact visuel
L'idée dans le cadre du standard H.264 est de sélectionner les mots (codewords) dans le flux de bits, qui une fois chiffrés altéreront uniquement la qualité visuelle du flux vidéo. Le chiffrement conduit alors à interpréter un mot de code au lieu d'un autre de même taille.

Les figures 3a et 3b schématisent le principe de la chaîne de codage/décodage avec les mécanismes de chiffrement et de déchiffrement, respectivement avec un décodeur vidéo standard de base et avec un décodeur vidéo ayant connaissance du processus de chiffrement et réalisant donc le déchiffrement en réception.

Pour le premier cas, figure 3a, la séquence de données est transmise à un codeur H.264, 1, qui reçoit les règles de codage et la clé de chiffrement. Les données chiffrées sont transmises de façon classique et elles sont reçues par un décodeur H.264, 2, pour être décodées.

Dans le deuxième cas, figure 3b, la séquence de données est chiffrée, par un codeur H.264, 3, avec des règles de codage et la clé de chiffrement. Les données chiffrées et la clé de chiffrement sont transmises à un décodeur H.264, 4, qui a accès aux règles de chiffrement et à cette clé.

Le codeur 3 est adapté à déterminer un ensemble de bits qui une fois codés n'ont pas d'influence sur la réalisation de l'étape de décodage, et à chiffrer au moins une partie ou la totalité des bits sélectionnés.

Le décodeur 4 est adapté à déterminer les bits susceptibles d'être chiffrés par le codeur 3 à partir de la clé de chiffrement et déchiffrer les bits ainsi reconnus comme chiffrés.

Le procédé selon l'invention comporte notamment une étape où l'on sélectionne des bits à chiffrer de la manière suivante :

1 - déterminer les parties du flux de données qui ont peu ou aucune influence dans le procédé de décodage, et/ou

2 - déterminer les parties du flux de bits qui modifient d'une manière que l'on appellera négligeable les contextes du procédé de décodage, dans le sens où la modification due au chiffrement ne génère pas de désynchronisation ou ne conduit pas à des flux de bits non compatibles.

Pour obtenir ces deux catégories ou classes de bits, une façon de procéder consiste, par exemple, à tester dans un jeu de séquences dans quelles parties du flux de bits on peut introduire des erreurs de syntaxe sans casser le procédé de décodage et en provoquant uniquement des erreurs visuelles.

Les bits dits « bits sélectionnés pour le chiffrement » doivent conserver cette capacité dans chaque flux de bits codés, et ceci pas uniquement dans une réalisation particulière du flux de bits.

De ce fait, un exemple de bits sélectionnés correspond au cas où plusieurs mots de codes de même longueur sont disponibles et que le remplacement de l'un par l'autre n'amène pas de changement majeur de contexte. Le chiffrement correspond alors à échanger une des configurations de bits par une autre, comme illustré par la figure 2a.

Quelques exemples d'application du procédé selon l'invention sont donnés ci-après dans le cadre du standard H.264, à titre illustratif et nullement limitatif.

Si l'on considère un exemple de chiffrement avec le mot de code fournissant l'information pour le mode de prédiction Intra 4*4.

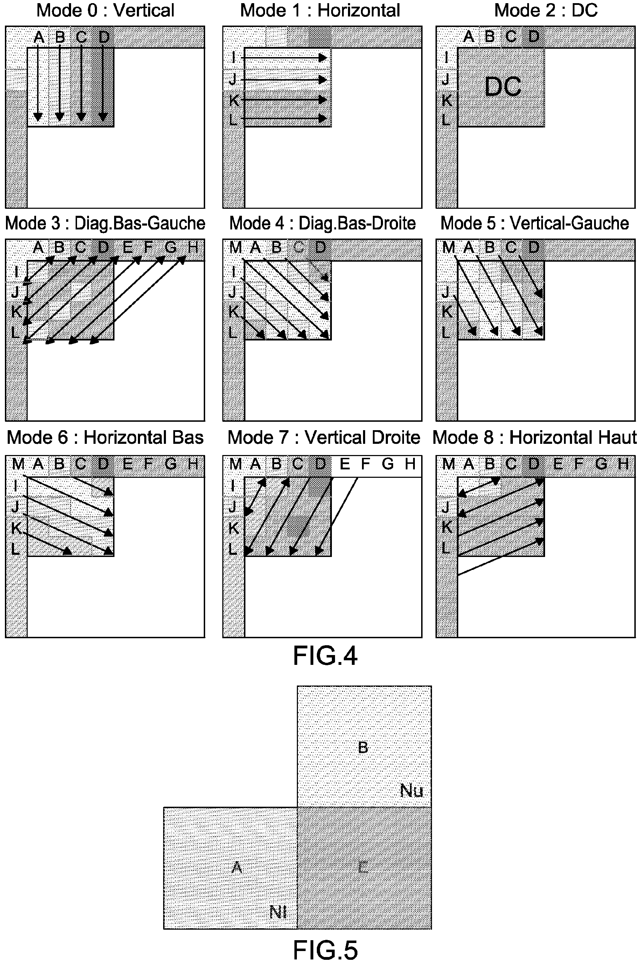

La table 1 et la figure 4 illustrent 9 modes possibles de prédiction Intra 4*4 dans le standard H.264.

**Table 1**

| 0 | Vertical |
|---|---|
| 1 | Horizontal |
| 2 | DC |
| 3 | Diagonal Bas gauche |
| 4 | Diagonal Bas droite |
| 5 | Diagonal Vertical droit |
| 6 | Diagonal Horizontal bas |
| 7 | Diagonal Vertical gauche |
| 8 | Diagonal Horizontal haut |

Si le mot de code Type du macro-block (Mb_type) indique que l'on est en mode Intra 4*4 (correspondant à Mb_type codé par l'index 0 comme montré dans la table 3), alors le mode prédit Intra 4*4 est codé pour chacun des 16 blocs du macrobloc.

Le mode de prédiction pour un bloc Intra 4*4 codé est représenté comme suit :

- '1' si la valeur à utiliser est la valeur par défaut dérivée du contexte (voir ci-dessous),
- '0xxx' si un mode de prédiction différent est utilisé.

Le mode par défaut du mode de prédiction, représenté par Pred_E pour le bloc courant (bloc E dans la figure 5) est donné par :

- Pred_E = min(Pred_A, Pred_B) si le bloc adjacent situé à gauche du bloc courant et le bloc adjacent situé en dessus du bloc courant (bloc A et bloc B figure 5) sont codés Intra 4*4 ;
- Pred_E = mode 2 (Prédiction _DC) autrement.

Pour un mode différent du mode par défaut, on élimine du jeu des valeurs possibles données dans la table 1 le mode par défaut. On obtient ainsi une table réduite de 8 valeurs, qui permet de coder le mode Intra par 3 bits, comme il est illustré avec l'exemple du mode par défaut mode 2 (DC).

La table 2 montre un exemple de méthode pour déterminer les bits codés pour le mode de prédiction Intra. Le mode par défaut DC est exclu pour trouver les autres possibilités. Pour le mode horizontal, les bits codés sont les bits '001' conduisant au mot de code '0001'.

**Table 2**

| 0 | mode considéré | étiquette sans le mode par défaut | Bits codés |
|---|---|---|---|
| 0 | Vertical | 0 | 000 |
| 1 | Horizontal | 1 | 001 |
| 3 | Diagonal Bas gauche | 2 | 010 |
| 4 | Diagonal Bas droite | 3 | 011 |
| 5 | Diagonal Vertical droit | 4 | 100 |
| 6 | Diagonal Horizontal bas | 5 | 101 |
| 7 | Diagonal Vertical gauche | 6 | 110 |
| 8 | Diagonal Horizontal haut | 7 | 111 |

Il est aisé de voir qu'on peut chiffrer les trois bits définissant le mode de prédiction afin de brouiller un décodeur standard sans risquer de rendre le flux non compatible.

De plus, comme la valeur du mode de prédiction Intra d'un bloc dépend des blocs adjacents situés au-dessus et à gauche, l'erreur de prédiction se propage aux blocs suivants engendrant plus d'erreurs visuelles et augmentant la difficulté pour la cryptanalyse.

La condition posée, d'assurer la compatibilité totale ou quasi-totale avec le standard, impose néanmoins de ne pas considérer certains blocs pour le chiffrement.

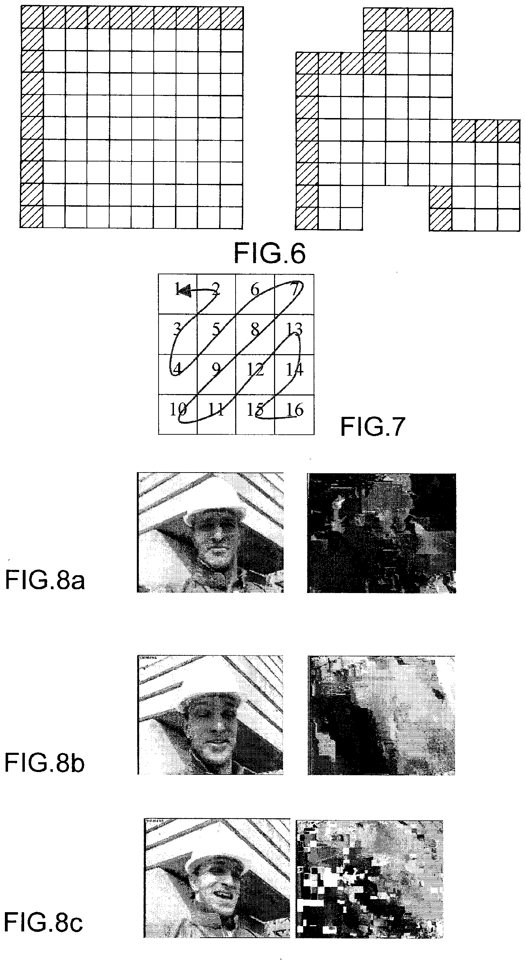

La figure 6 illustre un exemple de tels blocs. En effet, tous les modes de prédiction possibles de prédiction Intra 4*4 peuvent ne pas être autorisés pour les blocs se trouvant sur les bords des tranches d'images. De ce fait, ces blocs seront par sécurité non chiffrés.

La figure 6a représente un format de bloc classique rectangulaire et la figure 6b un format de bloc plus complexe, où les blocs quadrillés sont ceux qui ne seront pas chiffrés afin d'assurer la compatibilité totale avec le standard dans les flux de bits.

**Chiffrement de parties du type de macroblock (Mb_type)**

La table 3 ci-dessous regroupe les types de macroblocs qui sont traditionnellement désignés comme des macroblocs de type I ou Intra.

| Index | mot | Mb_type | Pred_Mode | Bloc codé chrominance | Bloc codé luminance |
|---|---|---|---|---|---|
| 0 | 1 | I_4x4 | Na | Na | Na |
| 1 | 010 | I_16x16_0_0_0 | 0 | 0 | 0 |
| 2 | 011 | I_16x16_1_0_0 | 1 | 0 | 0 |
| 3 | 00100 | I_16x16_2_0_0 | 2 | 0 | 0 |
| 4 | 00101 | I_16x16_3_0_0 | 3 | 0 | 0 |
| 5 | 00110 | I_16x16_0_1_0 | 0 | 1 | 0 |
| 6 | 00111 | I_16x16_1_1_0 | 1 | 1 | 0 |
| 7 | 0001000 | I_16x16_2_1_0 | 2 | 1 | 0 |
| 8 | 0001001 | I_16x16_3_1_0 | 3 | 1 | 0 |
| 9 | 0001010 | I_16x16_0_2_0 | 0 | 2 | 0 |
| 10 | 0001011 | I_16x16_1_2_0 | 1 | 2 | 0 |
| 11 | 0001100 | I_16x16_2_2_0 | 2 | 2 | 0 |
| 12 | 0001101 | I_16x16_3_2_0 | 3 | 2 | 0 |
| 13 | 0001110 | I_16x16_0_0_1 | 0 | 0 | 15 |
| 14 | 0001111 | I_16x16_1_0_1 | 1 | 0 | 15 |
| 15 | 000010000 | I_16x16_2_0_1 | 2 | 0 | 15 |
| 16 | 000010001 | I_16x16_3_0_1 | 3 | 0 | 15 |
| 17 | 000010010 | I_16x16_0_1_1 | 0 | 1 | 15 |
| 18 | 000010011 | I_16x16_1_1_1 | 1 | 1 | 15 |
| 19 | 000010100 | I_16x16_2_1_1 | 2 | 1 | 15 |
| 20 | 000010101 | I_16x16_3_1_1 | 3 | 1 | 15 |
| 21 | 000010110 | I_16x16_0_2_1 | 0 | 2 | 15 |
| 22 | 000010111 | I_16x16_1_2_1 | 1 | 2 | 15 |
| 23 | 000011000 | I_16x16_2_2_1 | 2 | 2 | 15 |
| 24 | 000011001 | I_16x16_3_2_1 | 3 | 2 | 15 |
| 25 | 000011010 | I PCM | Na | Na | Na |

**Table 3**

On remarque qu'il existe 3 types différents pour coder les 16 blocs d'un macrobloc (MB) :I_4*4 (les blocs sont codés en mode Intra 4 par 4), I_16*16 (les blocs sont codés en mode Intra 16 par 16) et I_PCM (les blocs sont codés directement en composantes yuv bien connues de l'homme de l'art).

Pour chacun de ces types, il y a différentes façons de décoder les flux de bits comme il est illustré sur la figure 1 pour les modes I_4*4 et I_16*16. En conséquence, un chiffrement standard compatible n'échangera pas les différents types Mb.

De ce fait, les symboles correspondant aux index 0 et 25 ne seront pas chiffrés et le procédé considérera uniquement le type Intra_16*16 dans le chiffrement du mot Mb_type.

On notera qu'en pratique, le type de macrobloc Intra 16*16 est utilisé plus fréquemment par le format H.264 pour des faibles débits.

Avec ce type de macrobloc, à partir des colonnes de la table 3, on en déduit :

1 - un symbole dit de codage du bloc de chrominance qui contient la valeur des blocs échantillons codés pour la chrominance, 0 = aucun résidu de chrominance n'est codé, 1 = seul le résidu DC (composante continue) de chrominance est codé, 2 = tous les résidus DC et AC (composantes fréquentielles) de la chrominance sont codés),
2 - un symbole dit de codage du bloc de luminance qui contient la valeur des échantillons pour la luminance (0 = aucun résidu AC n'est codé, 15 = tous les résidus AC sont codés),
3 - un symbole dit de mode de prédiction qui définit la façon dont la prédiction est réalisée (0 = vertical, 1 = horizontal, 2 = DC, 3 = diagonal).

Le dernier bit du mot de code ne changeant pas le procédé de décodage, il est sélectionné comme étant un bit à chiffrer.

Les valeurs CodeBlocChroma et CodeBlockLuma étant fixées pour des mots de code de même longueur, il est facile de voir que l'on peut marquer d'autres bits comme des « bits sélectionnés pour le chiffrement ».

Ceci est le cas pour les bits de mot de code 9, 10, 11 et 12 pour lesquels les deux bits avant le dernier bit peuvent être marqués et échangés d'une configuration possible ('01') à l'autre configuration ('10'), via le chiffrement

8

sans risque de désynchronisation ou de modification de contexte.

Le procédé exclut en fonctionnement normal, le choix des blocs situés sur la bordure supérieure ou en bordure gauche d'une tranche d'image pour le chiffrement.

**Chiffrement de parties du mode de prédiction de chrominance (Intra_Chroma_Pred_Mode)**

Le symbole Intra_Chroma_Pred_Mode spécifie le type de prédiction spatiale utilisée pour la composante de chrominance lorsque le macro-bloc est codé Intra.
Les symboles possibles sont rappelés dans la table 4.

| Index | Mot (codeword) | Mode de prédiction chrominance |
|---|---|---|
| 0 | 1 | DC |
| 1 | 01[0] | Horizontal |
| 2 | 01[1] | Vertical |
| 3 | 00100 | Plane |

**Table 4**

Le procédé sélectionne les 2 symboles n'ayant pas d'influence sur le décodage ou la synchronisation, c'est-à-dire les symboles correspondant au mode de prédiction vertical et au mode de prédiction horizontal. Le procédé marque le dernier bit utilisé pour le chiffrement.

**Chiffrement de parties du mode Intra 4*4**

Dans ce mode, le procédé sélectionne 3 bits lorsque le mode de prédiction diffère du mode par défaut, comme indiqué précédemment.

**Chiffrement de parties du delta du QP du macro-bloc (Mb_QP_Delta)**

Le symbole Mb_QP_Delta peut changer la valeur du paramètre de quantification QP dans le macrobloc. La valeur de Mb_QP_delta se trouvera dans la gamme [-26, +25]. La valeur est codée par un mot de code Exp-Colomb signé. Un exemple de code signé avec 10 mots de code est donné dans la table 5.
Le procédé sélectionne les bits suffixes (les bits qui suivent le premier '1'). Ceci entraîne que seul le premier mot de code n'aura pas de bits chiffrés, comme il est illustré dans la table 5 ci-après par le surlignement des bits correspondant.

| Index | Mot de code | Mb_QP_$\Delta$ |
|---|---|---|
| 0 | 1 | 0 |
| 1 | 01[0] | 1 |
| 2 | 01[1] | -1 |
| 3 | 001[00] | 2 |
| 4 | 001[01] | -2 |
| 5 | 001[10] | 3 |
| 6 | 001[11] | -3 |
| 7 | 0001[000] | 4 |
| 8 | 0001[001] | -4 |
| ... | ... | ... |

**Table 5**

**Chiffrement des signes de premiers +/-1 successifs (Trailing_Ones)**

La partie des résiduels, le champ Trailing_ones est un groupe de bits (0 à 3 bits) qui indique le signe des derniers coefficients différents de zéro de la transformée. Tous ces bits peuvent être chiffrés.

**Chiffrement des valeurs du suffixe du coefficient (Level_suffix)**

Pouvant aussi être considéré comme la seconde partie d'un champ de valeur du coefficient, ou Coeff_Level, le suffixe du coefficient est codé par un mot de code de longueur constante dont la longueur est définie contextuellement à partir des valeurs du préfixe du coefficient, dit level_prefix. Level_prefix est codé par un mot de code VLC, dont les valeurs possibles sont données dans la table 6. Level_prefix doit donc être gardé tel quel mais tous les bits du Level_Suffix peuvent être marqués comme des bits à chiffrer.

**Table 6**

| Level_prefix | Mot (codeword) |
| --- | --- |
| 0 | 1 |
| 1 | 01 |
| 2 | 001 |
| 3 | 0001 |
| 4 | 00001 |
| 5 | 000001 |
| 6 | 0000001 |
| 7 | 00000001 |
| 8 | 000000001 |
| 9 | 0000000001 |
| 10 | 00000000001 |
| 11 | 000000000001 |
| 12 | 0000000000001 |
| 13 | 00000000000001 |
| 14 | 000000000000001 |
| 15 | 0000000000000001 |

**Chiffrement des valeurs du nombre total de zéros restants (Total_zeros) et de la plage de zéros précédent la valeur du coefficient (Run_before)**

Les variables Total_zeros et run_before sont obtenues lors du codage des résidus. Elles permettent de définir la série des coefficients de transformation zéro ou non nuls.

Le nombre total de zéros depuis la composante continue lue en ordre direct jusqu'à la dernière valeur non nulle ou dernier coefficient est Total-zeros. Elle est codée avec une table VLC dépendant du nombre total de coefficients codés (dit Total_coeff).

Par ailleurs, le nombre de zéros précédents chaque coefficient non nuls (dit run_before) est également codé mais en ordre inverse, par la méthode bien connue du Zig-zag, comme il est illustré en figure 7.

Une valeur run_before est codée pour chaque coefficient non nul, démarrant avec la fréquence la plus élevée, avec 2 exceptions :

1 - s'il n'y a plus de zéros à coder, (i.e. on a atteint la valeur de Total_zeros en sommant les différents run_before), il n'est pas nécessaire de coder de nouvelles valeurs run_before,
2 - il n'est pas nécessaire de coder la valeur run_before pour le coefficient non nul final (fréquence la plus basse dans l'ordre inverse). Le mot de code VLC pour chaque valeur de run_before est choisi en fonction du nombre de zéros qui n'ont pas été encore codés (Zeros_Left) et la valeur run_before.

De ce fait, lorsque la valeur de Total_coeff est égale à 1, aucun run_before n'a besoin d'être codé. Il est en conséquence possible, dans ce cas uniquement, de changer la valeur de Total_zeros en fonction de la longueur du mot de code VLC car cela ne pourra avoir d'influence néfaste sur le décodage.

Les bits correspondants sont marqués comme étant des bits à chiffrer, comme il est illustré et surlignés dans la table 7 pour des blocs 4*4 et dans la table 8 pour les blocs 2*2 chroma_DC.

| Index | Mot (codeword) | Total_zeros |
|---|---|---|
| 0 | 1 | 0 |
| 1 | 010 | 1 |
| 2 | 011 | 2 |
| 3 | 0010 | 3 |
| 4 | 0011 | 4 |
| 5 | 00010 | 5 |
| 6 | 00011 | 6 |
| 7 | 000010 | 7 |
| 8 | 000011 | 8 |
| 9 | 0000010 | 9 |
| 10 | 0000011 | 10 |
| 11 | 00000010 | 11 |
| 12 | 00000011 | 12 |
| 13 | 000000010 | 13 |
| 14 | 000000011 | 14 |
| 15 | 00000001 | 15 |

**Table 7**

| Index | Mot (codeword) | Total_zeros |
|---|---|---|
| 0 | 1 | 0 |
| 1 | 01 | 1 |
| 2 | 001 | 2 |
| 3 | 000 | 3 |

**Table 8**

En pratique, s'il y a plus qu'un coefficient non nul, un codeur H.264 code, de manière itérative, Total_coeff-1 fois la variable run_before. Dans le cas particulier où il n'y a plus qu'un coefficient run_before à coder et qu'il doit être effectivement codé, c'est-à-dire pour zeros_left différent de 0, le coefficient run_before peut être chiffré en fonction de sa longueur comme il est montré dans la table 9.

Il est ainsi possible pour le décodeur de réaliser le chiffrement en accord à la valeur zeros_left sans risque de désynchronisation.

| run_before \ zeros_left | 1 | 2 | 3 | 4 | 5 | 6 | Supérieur à 6 |
|---|---|---|---|---|---|---|---|
| 0 | 1 | 1 | 11 | 11 | 11 | 11 | 111 |
| 1 | 0 | 01 | 10 | 10 | 10 | 000 | 110 |
| 2 |  | 00 | 01 | 01 | 011 | 001 | 101 |
| 3 |  |  | 00 | 001 | 010 | 011 | 100 |
| 4 |  |  |  | 000 | 001 | 010 | 011 |
| 5 |  |  |  |  | 000 | 101 | 010 |
| 6 |  |  |  |  |  | 100 | 001 |
| 7 |  |  |  |  |  |  | 0001 |
| 8 |  |  |  |  |  |  | 00001 |
| 9 |  |  |  |  |  |  | 000001 |
| 10 |  |  |  |  |  |  | 0000001 |
| 11 |  |  |  |  |  |  | 00000001 |
| 12 |  |  |  |  |  |  | 000000001 |
| 13 |  |  |  |  |  |  | 0000000001 |
| 14 |  |  |  |  |  |  | 00000000001 |

Table 9

Sans sortir du cadre de l'invention, les étapes décrites précédemment peuvent être généralisées à d'autres éléments du standard, tel que par exemple le champ numéro de trame de référence (Ref-Id) (voir figure 1).

Le procédé de chiffrement selon l'invention peut être adapté à tout autre standard de codage vidéo ou à des procédés qui permettent de discriminer des bits en respectant les conditions d'impact négligeable, au sens où la modification due au chiffrement ne génère pas de désynchronisation ou ne conduit pas à des flux de bits non compatibles sur les contextes de codage et l'impact visuel.

Les figures 8 à 9 représentent des exemples de mise en oeuvre de l'invention, pour différents niveaux de quantification (soit pour différents taux de compression, ici de l'ordre de 100 à 400 kbps) différentes séquences et différents formats.

Ces résultats ont été obtenus en chiffrant les différents bits détaillés dans la description de l'invention au standard H.264, exceptés pour 2 cas.

Le premier est le Mb_QP_delta, qui est gardé égal à 0 et non chiffré car le logiciel utilisé pour effectuer les simulations ne permet pas de changer cette valeur pour les tranches d'images I. Le second est dans le type Intra 16*16 MB dans lequel, pour des raisons de simplicité, seul le dernier bit de chaque symbole autorisé a été chiffré. En pratique, on observe dans les simulations faites que l'on chiffre pratiquement 25% des bits des tranches d'images I et environ 10-15% des bits des tranches d'images P. La différence de pourcentage est principalement due au fait que les champs spécifiques tels que Mbvect ou Ref_id (voir figure 1) n'ont pas été étudiés pour définir des bits correspondant à des bits sélectionnés pour le chiffrement.

Une comparaison entre la séquence déchiffrée, partie gauche de la figure et la partie chiffrée, partie droite et correspondant au résultat de décodage obtenu avec un décodeur standard ne connaissant pas l'opération de chiffrement. Ceci nous permet donc de montrer d'une part la compatibilité effective de la méthode de chiffrement partiel appliquée et de donner une illustration du résultat obtenu pour un décodeur ne connaissant pas la clef de déchiffrement.

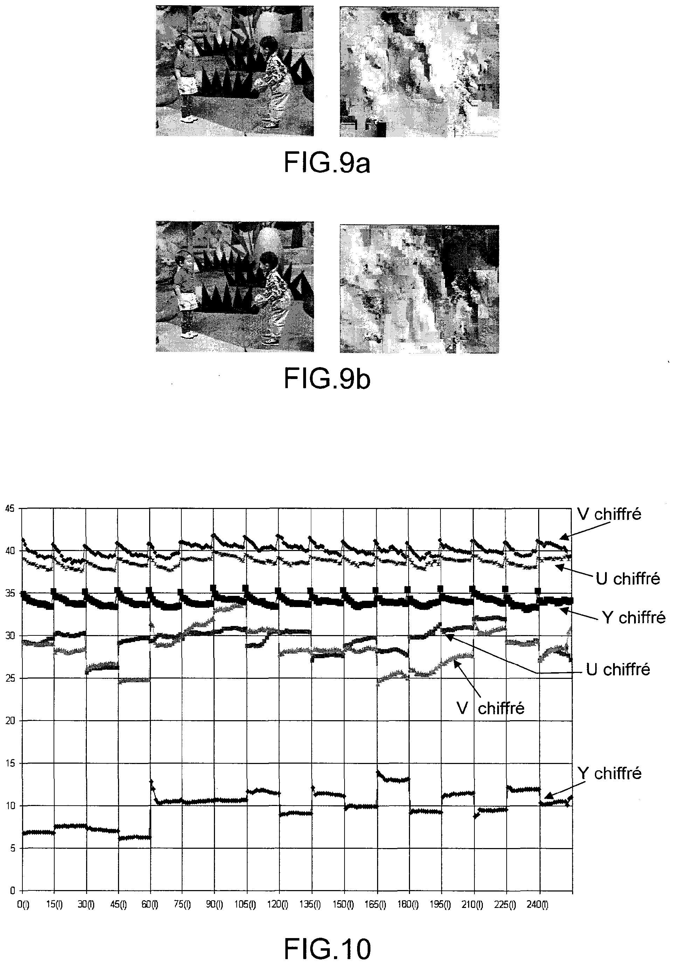

Empiriquement on constate que dans chacun des cas présentés, qu'il s'agisse du format CIF ou du format QCIF, qu'il s'agisse de tranches I ou P, qu'il s'agisse d'image de haute qualité (faible valeur de QP) ou de plus basse qualité (grande valeur de QP), et quelque soit la séquence (ici considérées les deux séquences de référence internationalement reconnues 'Foreman' et 'Children') ; la méthode proposée présente un niveau de chiffrement visuellement très satisfaisant. Ceci est confirmé plus objectivement par l'évolution du rapport signal à bruit (PSNR) donné en figure 10.

La figure 10 représente l'évolution du PSNR pour les composantes Y, U et V dans le cas de la séquence 'Foreman' au format QCIF, avec QP=30, et un débit de rafraîchissement d'une Intra chaque 15 images (IP=14) pour une longueur de séquence égale à 255 trames. Une dégradation d'environ 25 à 30 dB est observée pour la composante Y, composante de luminance qui est la plus importante dans le rendu visuel ; mais aussi d'environ 10 dB pour les composantes chrominances U et V. Cette différence est due au fait que les composantes chroma sont dans ce schéma moins chiffrée, puisqu'elles ont moins d'importance dans la restitution visuelle.

Sans sortir du cadre de l'invention, tout ce qui a été décrit précédemment peut s'appliquer pour des échanges de données multimédia, et les procédés qui permettent de discriminer les bits tout en respectant les conditions de contextes de codage ou d'impact visuel.

## Revendications

1. Procédé de chiffrement de données, sous forme de flux de bits, échangées entre un codeur (3) et un décodeur (4) dans un système vidéo, ledit système respectant un standard de compression vidéo, **caractérisé en ce qu'**il comporte au moins les étapes suivantes :

   1) lors de l'étape de codage (3), déterminer un ensemble de mots de code pour lesquels on extrait de chaque mot de code un sous-mot tel que la substitution d'un sous-mot par un autre sous-mot altère uniquement la qualité visuelle des données vidéo et n'engendre pas de désynchronisation et ne conduit pas à un flux de bits non compatible avec ledit standard,
   2) chiffrer les mots de code sélectionnés selon l'étape précédente en substituant un sous-mot de code par un autre sous-mot de code de façon à produire un unique flux chiffré et transmettre ce flux unique chiffré à l'étape de décodage (4).

2. Procédé selon la revendication 1 **caractérisé en ce que** l'on utilise le standard vidéo H.264.

3. Procédé selon la revendication 2 **caractérisé en ce que** dans le cas du mode de prédiction Intra, on chiffre les trois derniers bits du mode de prédiction Intra, le mode de prédiction Intra représentant donc le mot de code et ses trois derniers bit représentant le sous-mot.

4. Procédé selon la revendication 2 **caractérisé en ce qu'**un mot de code utilisé pour le chiffrement est le mot de code représentant le type de macro bloc Intra 16*16 et que les sous-mots extraits de ce mot de code dans le but d'être chiffrés sont déterminés à partir de :

1) un symbole dit de codage du bloc de chrominance qui contient la valeur des blocs échantillons codés pour la chrominance, 0 = aucun résidu de chrominance n'est codé, 1 = seul le résidu DC, composante continue, de chrominance est codé, 2 = tous les résidus DC et AC, composantes fréquentielles, de la chrominance sont codés,
2) un symbole dit de codage du bloc de luminance qui contient la valeur des échantillons pour la luminance, 0 = aucun résidu AC n'est codé, 15 = tous les résidus AC sont codés,
3) un symbole dit de mode de prédiction qui définit la façon dont la prédiction est réalisée, 0 = vertical, 1 = horizontal, 2 = DC, 3 = diagonal.

5. Procédé selon la revendication 2 **caractérisé en ce qu'**un mot de code utilisé pour le chiffrement est le mot de code correspondant au delta du paramètre de quantification QP du macro-bloc ou Mb_QP_delta et que les sous-mots extraits de ce mot de code dans le but d'être chiffrés sont déterminés par les bits suffixes qui suivent le premier '1' dans ledit mot de code représentant le symbole Mb_QP_delta.

6. Système de chiffrement et déchiffrement de données échangées entre un codeur et un décodeur dans un système vidéo respectant un standard de compression vidéo, ledit système étant **caractérisé en ce qu'**il comporte au moins :

• un codeur (3) adapté à :

◦ déterminer un ensemble de mots de code pour lesquels on extrait de chaque mot de code un sous-mot tel que la substitution d'un sous-mot par un autre sous-mot altère uniquement la qualité visuelle des données vidéo et n'engendre pas de désynchronisation et ne conduit pas à un flux de bits non compatible avec ledit standard,
◦ chiffrer les mots de code sélectionnés selon l'étape précédente en substituant un sous-mot de code par un autre sous-mot de code de façon à produire un unique flux chiffré et transmettre cet unique flux chiffré à l'étape de décodage (4).

• un décodeur (4) adapté à recevoir un unique flux chiffré et déterminer au sein de ce flux chiffré les bits susceptibles d'être chiffrés par le codeur à partir de la clé de chiffrement et déchiffrant les bits ainsi reconnus comme chiffrés.

7. Système selon la revendication 6 **caractérisé en ce que** le codeur (3) et le décodeur (4) sont de type H.264.

**Patentansprüche**

1. Verfahren zum Verschlüsseln von Daten in Form von Bitströmen, welche zwischen einem Codierer (3) und einem Decodierer (4) in einem Videosystem ausgetauscht werden, wobei das System einen Videokompressionsstandard einhält, **dadurch gekennzeichnet, dass** es mindestens folgende Schritte beinhaltet:

1) beim Codierschritt (3), Bestimmen einer Gruppe von Codewörtern, bei welchen aus jedem Codewort ein Unterwort so extrahiert wird, dass die Substitution eines Unterwortes durch ein anderes Unterwort nur die visuelle Qualität der Videodaten beeinflusst und keine Desynchronisation bewirkt und keinen mit dem Standard inkompatiblen Bitstrom erzeugt,
2) Verschlüsseln der im vorherigen Schritt gewählten Codewörter durch Substitution eines Unter-Codewortes durch ein anderes Unter-Codewort, um einen einzigen verschlüsselten Strom zu erzeugen, und diesen einzigen verschlüsselten Strom zum Decodierschritt (4) zu übertragen.

2. Verfahren nach Anspruch 1, **dadurch gekennzeichnet, dass** der Videostandard H.264 verwendet wird.

3. Verfahren nach Anspruch 2, **dadurch gekennzeichnet, dass** im Fall des Intra-Vorhersagemodus die drei letzten Bits des Intra-Vorhersagemodus verschlüsselt werden, wobei der Intra-Vorhersagemodus folglich das Codewort darstellt und seine drei letzten Bits das Unterwort darstellen.

4. Verfahren nach Anspruch 2, **dadurch gekennzeichnet, dass** ein zur Verschlüsselung verwendetes Codewort das Codewort ist, welches die Makroblock-Type Intra 16*16 darstellt, und dass die aus diesem Codewort zwecks deren Verschlüsselung extrahierten Unterwörter anhand folgender Elemente bestimmt werden:

1) einem Symbol, genannt Chrominanzblock-Codierungssymbol, welches den Wert der für die Chrominanz codierten Abtastblöcke enthält, 0 = kein Chrominanzrückstand codiert, 1 = nur der DC-Rückstand, Gleichstromkomponente, der Chrominanz ist codiert, 2 = alle Rückstände, DC und AC, Frequenzkomponenten der Chrominanz sind codiert,
2) einem Symbol, genannt Luminanzblock-Codierungssymbol, welches den Wert der Abtastwerte für die Luminanz enthält, 0 = kein AC-Rückstand codiert, 15 = alle AC-Rückstände sind codiert,
3) einem Symbol, genannt Vorhersagemodus-Symbol, welches die Art und Weise definiert, in welcher die Vorhersage erfolgt, 0 = vertikal, 1 = horizontal, 2 = DC, 3 = diagonal.

5.  Verfahren nach Anspruch 2, **dadurch gekennzeichnet, dass** ein zur Verschlüsselung verwendetes Codewort das Codewort ist, welches dem Delta des Quantifizierungsparameters QP des Makroblocks oder Mb_QP_delta entspricht, und dass die aus diesem Codewort zwecks deren Verschlüsselung extrahierten Unterwörter anhand der Suffix-Bits bestimmt werden, welche der ersten '1' in dem Codewort folgen, welches das Symbol Mb_QP_delta darstellt.

6.  Ver- und Entschlüsselungssystem von Daten, welche zwischen einem Codierer und einem Decodierer in einem Videosystem ausgetauscht werden, welches einen Videokompressionsstandard einhält, wobei das System **dadurch gekennzeichnet ist, dass** es mindestens Folgendes beinhaltet:

    • einen Codierer (3), geeignet zum:

        ◦ Bestimmen einer Gruppe von Codewörtern, bei welchen aus jedem Codewort ein Unterwort so extrahiert wird, dass die Substitution eines Unterwortes durch ein anderes Unterwort nur die visuelle Qualität der Videodaten beeinflusst und keine Desynchronisation bewirkt und keinen mit dem Standard inkompatiblen Bitstrom erzeugt,
        ◦ Verschlüsseln der im vorherigen Schritt gewählten Codewörter durch Substitution eines Unter-Codewortes durch ein anderes Unter-Codewort, um einen einzigen verschlüsselten Strom zu erzeugen, und diesen einzigen verschlüsselten Strom zum Decodierschritt (4) zu übertragen,

    • einen Decodierer (4), geeignet zum Empfangen eines einzigen verschlüsselten Stromes und zum Bestimmen, innerhalb dieses verschlüsselten Stromes, der durch den Codierer anhand des Verschlüsselungsschlüssels verschlüsselbaren Bits, und welcher die so als verschlüsselt erkannten Bits entschlüsselt.

7.  System nach Anspruch 6, **dadurch gekennzeichnet, dass** der Codierer (3) und der Decodierer (4) vom Typ H.264 sind.


**Claims**

1.  A method of enciphering data, in the form of bit streams, exchanged between a coder (3) and a decoder (4) in a video system, said system respecting a video compression standard, **characterized in that** it comprises at least the following steps:

    1) determining, during the coding step (3), a set of code words, for which, from each code word a sub word is extracted, such that the substitution of a sub word by another sub word will impair only the visual quality of the video data and does not generate any desynchronization and does not lead to a bit stream that is incompatible with said standard,
    2) enciphering the code words selected in the preceding step by substituting a sub-code word by another sub code word, so as to generate a single enciphered stream and to transmit this single enciphered stream to the decoding step (4).

2.  The method as claimed in claim 1, **characterized in that** the H.264 video standard is used.

3.  The method as claimed in claim 2, **characterized in that** in the case of the Intra prediction mode, the three last bits of the Intra prediction mode are enciphered, the Intra prediction mode representing therefore the code word and its three last bits representing the sub word.

**4.** The method as claimed in claim 2, **characterized in that** a code word used for the encipherment is the code word representing the Intra 16*16 macroblock type and **in that** the sub words extracted from this code word in order to be enciphered are determined from:

1) a so-called chrominance block coding symbol which contains the value of the coded sample blocks for the chrominance, 0 = no chrominance residual is coded, 1 = only the DC, continuous component chrominance residual, is coded, 2 = all the DC and AC, frequency components, of the chrominance are coded),
2) a so-called luminance block coding symbol which contains the value of the samples for the luminance, 0 = no AC residual is coded, 15 = all the AC residuals are coded,
3) a so-called prediction mode symbol which defines the way in which the prediction is made, 0 = vertical, 1 = horizontal, 2 = DC, 3 = diagonal.

**5.** The method as claimed in claim 2, **characterized in that** a code word used for the encipherment is the code word corresponding to the delta of the quantization parameter QP of the macroblock or Mb_QP_delta, and the sub words extracted from this code word in order to be enciphered are determined by the suffix bits which follow the first '1' in said code word representing the symbol Mb_QP_delta.

**6.** A system for the encipherment and decipherment of data exchanged between a coder and a decoder in a video system respecting a video compression standard, said system being **characterized in that** it comprises at least:

• a coder (3) suitable for:

◦ determining a set of code words, for which, from each code word a sub word is extracted, such that the substitution of a sub word by another sub word will impair only the visual quality of the video data and does not generate any desynchronization and does not lead to a bit stream that is incompatible with said standard,
◦ enciphering the code words selected in the preceding step by substituting a sub-code word by another sub code word, so as to generate a single enciphered stream and to transmit this single enciphered stream to the decoding step (4),

• a decoder (4) suitable for receiving a single enciphered stream and determining within this enciphered bit stream capable of being enciphered by the coder on the basis of the cipher key and deciphering the bits thus recognized as enciphered.

**7.** The system as claimed in claim 6, **characterized in that** the coder (3) and the decoder (4) are of H.264 type.

**0** Tree1

**1** MB de type Intra 4x4

**3** Prédiction luminance

**5** Prédiction Chrominance

**6** Format du bloc codé

**7** Delta du QP du macro-bloc

Compteur format du bloc codé

**10** Résidus Luminance DC et AC

Compteur des blocs DC chrom.

**12** Résidus chrominance DC (composante continue)

Compteur des blocs AC chrom.

**14** Résidus chrominance AC (autres composantes)

**15**

**2** MB de type Intra 16x16

**4** Prédiction Chrominance

**8** Delta du QP du macro-bloc

**9** Résidus Luminance DC en 16x16

Compteur format du bloc codé

**11** Résidus Luminance AC

Compteur des blocs DC chrom.

**13** Résidus chrominance DC

Compteur des blocs AC chrom.

**14** Résidus chrominance AC

**Codage des résidus**

**1** Nombre de coefficients codés

Compteur des T1's

**2** Signes des premiers +/-1 successifs (T1's)

Compteur sur le nombre de coefficients

**3** Valeurs des coefficients

**4** Nombre total de zéros restants

Compteur sur le nombre de zéros restants

**5** Plage de zéros précédant la valeur

## FIG.1a

FIG.1b

## FIG.2a

AES-CTR
Chiffrement généré
séquence

| x | x | x | → | chiffrement | → | x' | x' | x' |

## FIG.2b

| 0 | 0 | 0 |
|---|---|---|
| 0 | 0 | 1 |
| 0 | 1 | 0 |
| 0 | 1 | 1 |
| 1 | 0 | 0 |
| 1 | 0 | 1 |
| 1 | 1 | 0 |
| 1 | 1 | 1 |

$\equiv$ | x | x | x |

| 0 | 0 | 1 | → | X-OR | → | 1 | 0 | 0 |

AES-CTR
Chiffrement généré
Séquence (3 bits) :
101

## FIG.2c

| 0 | 0 | 0 |
|---|---|---|
| 0 | 0 | 1 |
| 1 | 1 | 0 |
| 1 | 1 | 1 |

$\equiv$ | y | y | y |

| 0 | 0 | 1 | → | Circulaire parmi 4 | → | 1 | 1 | 1 |

AES-CTR
Chiffrement généré
Séquence (2 bits) :
10

## FIG.2d

| 0 | 0 | 0 |
|---|---|---|
| 0 | 0 | 1 |
| 0 | 1 | 0 |
| 1 | 1 | 0 |
| 1 | 1 | 1 |

$\equiv$ | z | z | z |

| 0 | 0 | 1 | → | décalage modulo 5 | → | 0 | 1 | 0 |

AES-CTR
chiffrement généré
Séquence (9 bits) :
111111010

EP 1 829 379 B1

EP 1 829 379 B1

Règles et clés de
chiffrement

1
Source séquence → **H.264 codeur**

Transmission classique

2 **H.264 décodeur** → Séquence décodée
et chiffrée

## FIG.3a

Règles et clés de
chiffrement

Règles et clés de
chiffrement

Transmission clé

3
Source séquence → **H.264 codeur**

Transmission classique

**H.264 décodeur** 4 → Séquence décodée
et déchiffrée

## FIG.3b

FIG.4

FIG.5

FIG.6

FIG.7

FIG.8a

FIG.8b

FIG.8c

FIG.9a

FIG.9b

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1499126 A

**Littérature non-brevet citée dans la description**

- A FORMAT-COMPLIANT CONFIGURABLE EN-CRYPTION FRAMEWORK FOR ACCESS CON-TROL OF VIDEO. **WEN J et al.** IEEE TRANSAC-TIONS ON CIRCUITS AND SYSTEMS FOR VIDEO TECHNOLOGY. IEEE INC, vol. 12, 545-557